# EUROPEAN PATENT APPLICATION

(11) **EP 1 189 321 A1**
(43) Date of publication of application: **20.03.2002**
(21) Application number: 01914213.2
(22) Date of filing: 23.03.2001
(51) Int. Cl.: H02B 1/21, H02B 1/36

(54) **WIRING CIRCUIT BREAKER AND SWITCHBOARD**

(30) Priority: 03.04.2000 JP 2000100659
(71) Applicant: Terasaki Denki Sangyo Kabushiki Kaisha, Osaka-shi,Osaka 545-0021 (JP)
(72) Inventor: KOTANI,Yuji Terasaki Denki Sangyo Kabushiki Kaisha, Abeno-ku, Osaka-shi, Osaka 545-0021 (JP); FUNAKI,Kozo Terasaki Denki Sangyo Kabushiki Kaisha, Abeno-ku, Osaka-shi, Osaka 545-0021 (JP)
(74) Representative: Winter, Brandl, Fürniss, Hübner, Röss, Kaiser, Polte Partnerschaft
(86) International application number: JP0102353
(87) International publication number: WO0176031

(57) **Abstract**

A circuit breaker according to this invention includes a mounting block 26 having on its back side plug-in terminals 30a, 30b, and 30c coming into contact with parallel bus bars 28a, 28b, and 28c, a breaker main body 25 detachably mounted to the mounting block such that its length direction is perpendicular to the parallel bus bars, relay conductors 32a, 32b, and 32c and connection plates provided on the mounting block to electrically connect input terminals 23a, 23b, and 23c of the breaker main body and the plug-in terminals of the mounting block.

## Description

### TECHNICAL FIELD

The present invention relates to a circuit breaker having a plug-in terminal to be directly connected to a bus bar provided in a switchboard, and to a switchboard accommodating this circuit breaker.

### BACKGROUND ART

A large number of motors are used in a ship, and a switchboard called a motor starter panel is installed for centralized control of these motors. In this switchboard, a control unit is provided for each motor, and a plurality of control units are vertically stacked together in a number of stages. An electromagnetic contactor, an overcurrent relay and so on are mounted to each control unit and, further, a circuit breaker accommodated in an insulating case is mounted thereto.

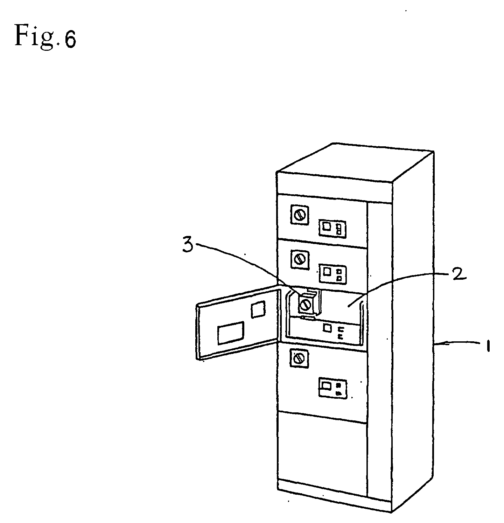

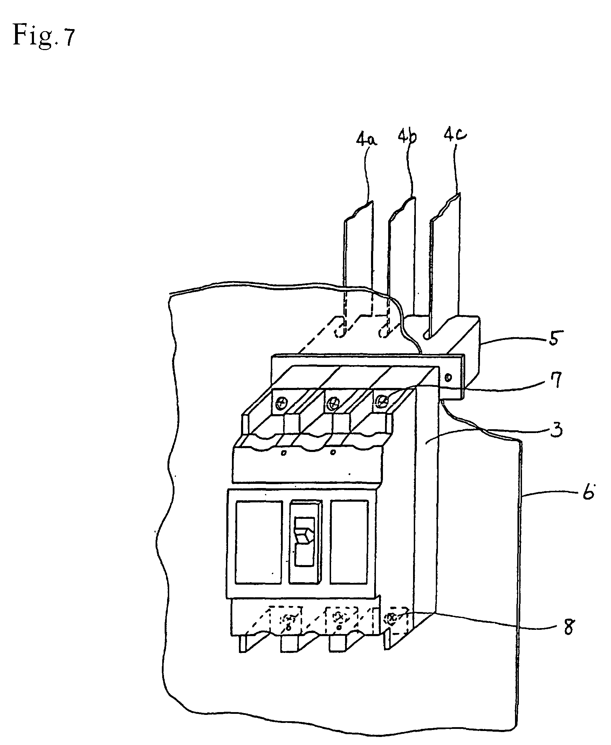

Japanese Utility Model Registration No. 2508791 discloses a conventional switchboard of this type. As shown in Fig. 6, a plurality of control units 2 are vertically stacked together in a switchboard 1. A circuit breaker 3 is provided in each control unit. As shown in Fig. 7, in the interior of the switchboard 1, three vertically extending bus bars 4a, 4b, and 4c are arranged in parallel. The circuit breaker 3 is mounted to a terminal block 5 having terminals to be fitted onto these bus bars 4a, 4b, and 4c, and the terminal block 5 is mounted to a back panel 6 of the control unit.

In front view, the direction of the lines connecting input terminals 7 and output terminals 8 will be referred to as the length direction of the circuit breaker 3 while the direction perpendicular thereto will be referred to as the width direction of the same. As shown in Fig. 7, in the conventional switchboard, the circuit breaker 3 is mounted vertically in a manner that the length direction thereof is parallel to the bus bars 4a, 4b, and 4c. Since the length dimension of the circuit breaker is usually larger than the width dimension thereof, there is a problem in that the height of each control unit is rather large, resulting in the entire switchboard being rather tall.

### DISCLOSURE OF INVENTION

It is an object of the present invention to provide a switchboard having a small height in spite of its construction in which a plurality of control units each accommodating a circuit breaker are vertically stacked together, and to provide a circuit breaker which can solve such a problem.

To solve the above problem, there is provided, in accordance with the present invention, a circuit breaker which is electrically connected to parallel bus bars for a power source, the circuit breaker comprising a mounting block having on its back surface plug-in terminals coming into contact with the parallel bus bars, a breaker main body detachably mounted to the mounting block such that a length direction in which lines connecting input terminals and output terminals extend is perpendicular to the parallel bus bars, and connection conductors provided in the mounting block to electrically connect the input terminals of the breaker main body and the plug-in terminals of the mounting block.

With this construction, the breaker main body can be arranged and connected to the parallel bus bars for the power source such that its length direction is perpendicular to the parallel bus bars. Further, since the breaker main body is detachable with respect to the mounting block, it is possible to use an existing breaker main body.

In accordance with the present invention, in a switchboard in which a plurality of control units are vertically stacked together along parallel bus bars arranged vertically, there is accommodated in each control unit a circuit breaker which has on its back side plug-in terminals coming into contact with the parallel bus bars and whose length direction in which lines connecting input terminals and output terminals extend is perpendicular to the parallel bus bars.

With this construction, it is possible to reduce the height of each control unit, thereby reducing the height of the entire switchboard.

### BRIEF DESCRIPTION OF DRAWINGS

Fig. 1 is a plan view showing a circuit breaker mounted in a switchboard according to an embodiment of the present invention;
Fig. 2 is a front view of a switchboard according to an embodiment of the present invention;
Fig. 3 is a front view of a mounting block of the circuit breaker of Fig. 1;
Fig. 4 is a sectional view taken along the line A-A of Fig. 3 as seen from the direction of X;
Fig. 5 is a sectional view taken along the line C-C of Fig. 3 as seen from the direction of Y;
Fig. 6 is a general perspective view showing a conventional switchboard; and
Fig. 7 is a perspective view of a circuit breaker mounted in the conventional switchboard.

### BEST MODE FOR CARRYING OUT THE INVENTION

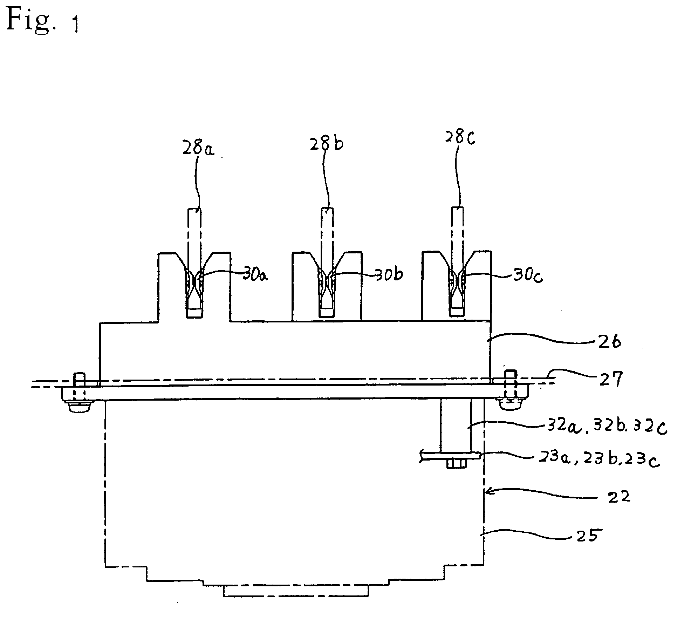

An embodiment of the present invention will be described with reference to Figs. 1 to 5.

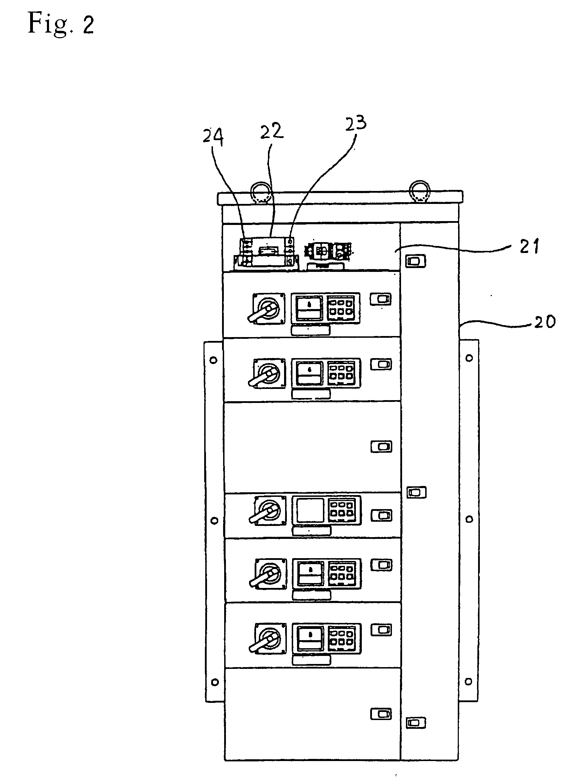

Fig. 2 shows a switchboard 20 according to this embodiment in which six control units are vertically stacked together. With reference to Fig. 2, an uppermost control unit 21 will be described in which the surface panel is omitted so as to show the interior thereof. In a circuit breaker 22 of this control unit, the lines connecting input terminals 23 and output terminals 24 extend laterally. That is, in a case that, in front view, the direction of the lines connecting the input terminals 23 and the output terminals 24 extend is referred to as the length direction of the circuit breaker 22 while the direction perpendicular thereto is referred to as the width direction, the circuit breaker 22 is mounted such that its length direction coincides with the horizontal direction.

Referring to Fig. 1, the circuit breaker 22 has a mounting block 26 made of an insulating molded member, and a breaker main body 25 detachably mounted to the mounting block 26 and accommodated in an insulating case, the mounting block 26 being mounted to a back panel 27 of the control unit. Bus bars 28a, 28b, and 28c which are common to the respective circuit breakers of the six control units shown in Fig. 2 extend vertically and are arranged so as to be parallel to each other. In front view, three-phase input terminals 23a, 23b, and 23c of the circuit breaker 22 are positioned on the C-phase bus bar 28c.

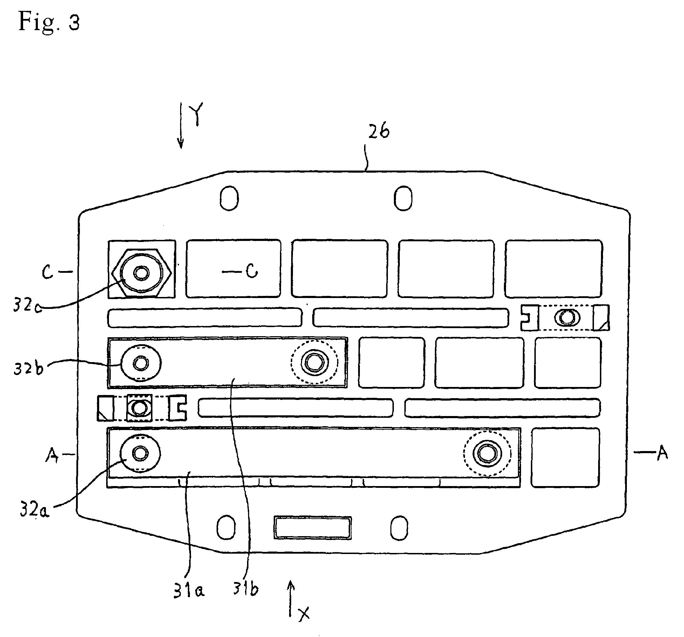

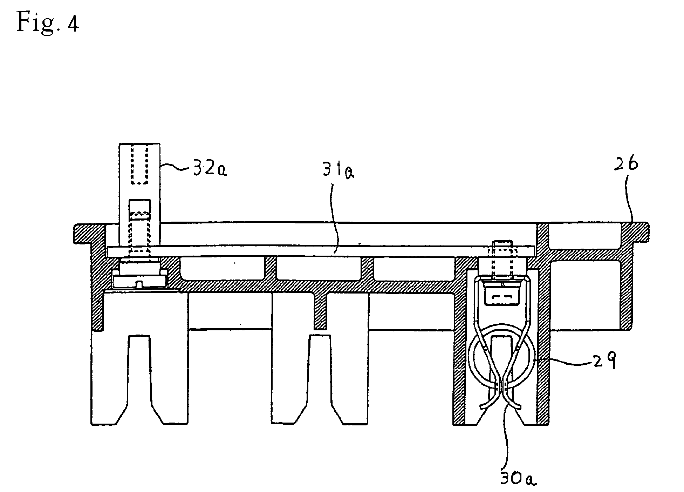

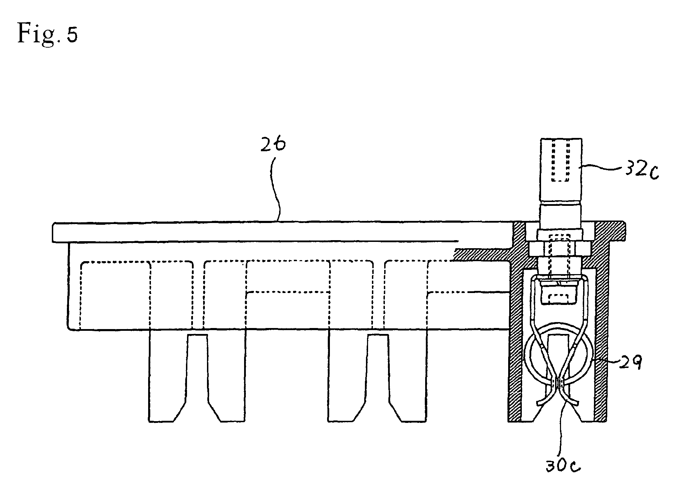

Referring to Figs. 1, 4, and 5, on the back side of this mounting block 26, there are provided at positions corresponding to the bus bars 28a, 28b, and 28c terminals 30a, 30b, and 30c each having two legs and biased by a spring 29 formed of piano wire such that the two legs are brought closer to each other, respectively. As shown in Fig. 3, connection plates 31a and 31b are provided on the front side of this mounting block and, as shown in Fig. 4, one end of the connection plate 31a is connected to the terminal 30a by a screw, and a relay conductor 32a for connection to the input terminal 23a of the circuit breaker is mounted to the other end thereof. Although unillustrated due to the basically same structure as that shown in Fig. 4, one end of the connection plate 31b is similarly connected to the terminal 30b by a screw, and mounted to the other end thereof is a relay conductor 32b for connection to the input terminal 23b of the circuit breaker. As shown in Fig. 5, a relay conductor 32c is directly connected to the C-phase terminal 30c by a screw. The connection plates 31a and 31b and the relay conductors 32a, 32b, and 32c constitute the connection conductor of the present invention.

The mounting of this circuit breaker 25 is performed as follows. First, the mounting block 26 is pressed against the bus bars 28a, 28b, and 28c so that the legs of each of the terminals 30a, 30b, and 30c may be spread apart to come into contact with the bus bars 28a, 28b, and 28c, respectively, and then the mounting block 26 is mounted to the back panel 27 in this condition. At this time, the bus bars 28a, 28b, and 28c are electrically connected to the relay conductors 32a, 32b, and 32c, respectively. Next, the breaker main body 25 is placed on the mounting block 26, and the input terminals 23a, 23b, and 23c thereof are connected to the relay conductors 32a, 32b, and 32c, respectively, by screws. With this construction, it is possible to easily mount a standard-type breaker main body such that its length direction coincides with the horizontal direction.

Further, due to the provision of plug-in terminals, each control unit is detachable with respect to the bus bars 28a, 28b, and 28c, facilitating the assembly and inspection of the switchboard.

The above-described embodiment of the present invention has only been represented by way of an example and should not be construed restrictively. The scope of the present invention is indicated by the appended claims, and all manner of modifications are possible without departing from the scope of the claims or a scope equivalent thereto.

In accordance with the present invention, constructed as described above, a circuit breaker comprises a mounting block having on its back side plug-in terminals coming into contact with parallel bus bars, and a breaker main body mounted to the mounting block such that its main circuit conductors are perpendicular to the parallel bus bars, the mounting block being equipped with connection conductors for connection between the input terminals of the breaker main body and the plug-in terminals, whereby it is possible to form a switchboard which is relatively low.

Further, due to the construction having bus bars of respective phases arranged in parallel in which a number of control units each having on its back side plug-in terminals coming into contact with the bus bars of respective phases and each accommodating a circuit breaker such that its length direction is perpendicular to the parallel bus bars are stacked together, it is advantageously possible to achieve a reduction in the height of the switchboard.

## Claims

1. A circuit breaker which is electrically connected to parallel bus bars for a power source,
**characterized in that**
said circuit breaker comprises:
a mounting block having on its back surface plug-in terminals coming into contact with the parallel bus bars;
a breaker main body detachably mounted to said mounting block such that a length direction in which lines connecting input terminals and output terminals extend is perpendicular to said parallel bus bars; and
connection conductors provided in said mounting block to electrically connect the input terminals of said breaker main body and the plug-in terminals of said mounting block.

2. A switchboard in which a plurality of control units are stacked together along parallel bus bars arranged vertically,
**characterized in that**
there is accommodated in each control unit a circuit breaker which has on its back side plug-in terminals coming into contact with the parallel bus bars and whose length direction in which lines connecting input terminals and output terminals extend is perpendicular to the parallel bus bars.

3. A switchboard according to claim 2, wherein said circuit breaker is a circuit breaker described in claim 1.
